# EUROPEAN PATENT APPLICATION

(11) **EP 2 259 404 A1**
(43) Date of publication of application: **08.12.2010**
(21) Application number: 09161679.7
(22) Date of filing: 02.06.2009
(51) Int. Cl.: H02J 7/00

(54) **Charging device and algorithm for charging nimh batteries**

(71) Applicant: Oticon A/S, 2765 Smoerum (DK)
(72) Inventor: Flemming, Frederik, DK-2765, Smørum (DK)
(74) Representative: Nielsen, Hans Jörgen Vind

(57) **Abstract**

The invention relates to a method of charging or recharging a NiMH battery. The invention further relates to a charging station and a system. The object of the present invention is to provide a charging algorithm that charges the battery in a relatively short time and at the same time is relatively gentle as regards its life time degradation. The problem is solved in that the method comprises a) providing a constant charge current until a predefined threshold voltage is reached; b) when the predefined threshold voltage is reached, keeping the voltage constant by reducing the charge current; and wherein the predefined threshold voltage is determined depending on the temperature of the battery. This has the advantage of providing a charging algorithm constituting a compromise between charging speed and battery life time. The invention may e.g. be used for the portable communication devices, e.g. listening devices, such as hearing instruments.

## Description

### TECHNICAL FIELD

The present invention relates to charging of rechargeable batteries, in particular to charging of NiMH batteries. The invention furthermore relates to a charging station for charging or recharging rechargeable batteries.

The invention may e.g. be useful in applications such as portable communications devices, e.g. listening devices, such as hearing instruments.

### BACKGROUND ART

Rechargeable batteries increasingly find their way into portable consumer products, e.g. communications devices, cameras, listening devices, etc.

In listening devices, such as e.g. hearing instruments or headsets, comprising parts for being mounted at or in the ear of a user, size and reliability are decisive parameters. The space available for a local energy source, such as a rechargeable battery, is limited and the selection of battery cells having an appropriate combination of parameters such as size [mm], capacity [mAh], nominal cell voltage [V], possible number of recharging cycles [#], is not large. The unit mAh is an abbreviation of milli-Ampére-hours, i.e.10⁻³ Ampére-hours.

It has turned out that NiMH (Nickel Metal Hydride) batteries constitute a relevant candidate.

For a medical device, such as e.g. a hearing instrument or an implanted device, battery life time (here defined by the possible number of recharging cycles without significant degradation) is an important parameter. The charging algorithm can have a considerable influence on battery life time. Important parameters of a charging algorithm are: charging current (charge rate), charging time, degree of overcharging, etc. It is often assumed that the charging efficiency of NiMH batteries is around 2/3 (i.e. to get e.g. 660 mAh out of a battery, one has to (over)charge the battery to 1000 mAh) under normal charging conditions. The necessary overcharging for a given nominal capacity is assumed to increase with increasing charging rate.

In common-size NiMH hydride batteries, temperature increase can be used to determine the charge end point. US 6,731,096 B1 deals with a battery charging algorithm for NiMH batteries. The algorithm is based on temperature control of the charging process and addresses in particular batteries of a certain size/capacity.

### DISCLOSURE OF INVENTION

Consequently, there is a need for an efficient charging algorithm for relatively small NiMH batteries.

An object of the present invention is to provide a charging algorithm that charges the battery in a relatively short time and at the same time is relatively gentle as regards its life time degradation.

Objects of the invention are achieved by the invention described in the accompanying claims and as described in the following.

### Charging algorithm:

An object of the invention is achieved by a method of charging or recharging a NiMH battery. The method comprises
a) providing a constant charge current until a predefined threshold voltage is reached;
b) when the predefined threshold voltage is reached, keeping the voltage constant by reducing the charge current;
wherein the predefined threshold voltage is determined depending on the temperature of the battery.

This has the advantage of providing a charging algorithm constituting a compromise between charging speed and battery life time. The charging of the battery is most powerful during the first part of the procedure where the battery is relatively 'empty' (discharged) and more relaxed during the later part of the procedure where the battery is becoming increasingly 'full' (charged). An advantage of the method is that the charging process can be continued as long as is convenient for the user of the rechargeable battery (or the device wherein it is located) *without* degrading the battery life time. I.e. the charging process does not have to be deliberately terminated, e.g. after a specific charging time. This has the advantage that the inherent discharging process of the battery (even without a load of the battery) can be continuously compensated for in the later part of the charging procedure, so that a user gets a maximum capacity of the recharged battery irrespective of when he removes the battery from the charging station (as long as it has been charged a minimum amount of time, e.g. in the range from 4-8 hours, e.g. 6 hours.

In a particular embodiment, the constant charge current is in the range from 0.1 C to 5 C, preferably, 0.5·C to 2·C. The unit C is used to indicate the charge current that is necessary to recharge a battery in one hour (h). If e.g. a rechargeable battery has a capacity of 22 mAh, a current of 1 C for that battery would be 22 mA. In an embodiment, the charge current is smaller than or equal to 50 mA, such as smaller than or equal to 30 mA, such as smaller than or equal to 15 mA, such as smaller than or equal to 10 mA. In an embodiment, the charge current is in the range from 10 mA to 50 mA, e.g. 20 mA to 35 mA.

In general, the predefined threshold voltage Vₜₕ is determined as the temperature dependent nominal battery voltage V_{N}(T) of a NiHM cell at the current temperature T of the battery. In a particular embodiment, 1.480 V < V_{N}(T₀) < 1.500V, where T₀ is a reference temperature, e.g. room temperature. In a particular embodiment, -0.004 < dV_{N}/dT [V/°C] < -0.002. In an embodiment, V_{N}(T₀) = 1.485 V. In an embodiment, dV_{N}/dT = -0.003 V/°C. In a particular embodiment, the predefined threshold voltage Vₜₕ is determined as Vₜₕ(T) = V_{N}(T₀)+(T-T₀)·dV_{N}/dT, e.g. as Vₜₕ(T) [V] = 1.485 - 0.003·(T [°C] - 25), where T is the temperature, T₀ is a reference temperature and V_{N}(T₀) is the nominal battery voltage at the reference temperature To. In an embodiment, the battery temperature is essentially equal to the environmental temperature. In an embodiment, the battery temperature is assumed to be equal to the temperature of a charging chamber wherein the battery (or the device which it energizes) is located and connected to a charging source (e.g. a controllable, variable current source) during charging or recharging of the battery.

In a particular embodiment, the NiMH battery has a capacity smaller than or equal to 100 mAh, such as smaller than or equal to 50 mAh or smaller than or equal to 30 mAh. In such relatively small capacity batteries, the temperature increase during charging is limited, e.g. ≤ 5 °C, such as ≤ 3 °C, such as ≤ 1 °C. Under such circumstances, the temperature of the battery is essentially equal to the temperature of the environment, e.g. of the casing of the battery or the device it forms part of.

In an embodiment, a maximum dimension (e.g. a diameter) of the battery is smaller than or equal to 10 mm, such as ≤ 8 mm, such as ≤ 6 mm, such as ≤ 5 mm.

The charging algorithm is specifically adapted to a NiMH rechargeable battery cell. Preferably, other rechargeable or ordinary (so-called primary battery cells) are not placed in the charging station. In a particular embodiment, the method comprises checking whether the battery is an appropriate rechargeable battery (at which the charging algorithm is aimed). This can e.g. be done by measuring the effect (e.g. voltage increase) of a short time (e.g. ≤ 1 minute such as ≤ 20 s) recharging procedure, the result of which can be used to indicate whether the battery is a rechargeable battery or a non-rechargeable battery, a relatively high voltage change (e.g. resulting in a battery voltage > 1.85 V) indicating a primary battery cell. Preferably, an error message is provided, and/or the charging is automatically terminated.

In a particular embodiment, the method comprises terminating charging, in case the predefined threshold voltage is not reached in a predefined time. In an embodiment, the predefined time is at least 25% larger than the normal time for reaching the threshold voltage at that particular charging current and temperature, assuming a substantially empty battery at the start of the charging procedure. In a particular embodiment, the predefined time is ≤ 30 minutes.

At the end of the charging cycle, heat is generated in the battery due to chemical reactions, because oxygen starts to form at the electrodes and to be recombined at the catalyst. The present algorithm minimizes this unintentional chemical process by controlling the charging process thereby avoiding loss of energy and battery degradation.

In an embodiment, the overcharging of the battery during a recharging process is smaller than or equal to 35%, such as smaller than or equal to 25%, such as smaller than or equal to 15%. This is preferably achieved by keeping the charging voltage constant during the later part of the charging procedure. This has the beneficial effect of easing the wear of the battery, thereby providing a relatively longer life time of the rechargeable battery (i.e. increasing the number of charging cycles before a significant degradation of the battery is experienced).

### A charging station:

A charging station for charging or recharging rechargeable batteries is furthermore provided by the present invention. The charging station comprises
A) a charging chamber for receiving a rechargeable battery or a device comprising a rechargeable battery;
B) a variable current source for charging a rechargeable battery located in the charging chamber;
C) an interface for transferring energy from the charging station to the rechargeable battery and for transferring status information from the rechargeable battery to the charging station;
D) a data processing system comprising a processor and program code means for causing the processor to perform at least some of the steps of the method according to any one of claims 1-8 using said charging chamber, said variable current source and said interface.

It is intended that the structural features of the charging method described above, in the detailed description of 'mode(s) for carrying out the invention' and in the claims can be combined with the charging station, when appropriately substituted by a corresponding structural features, and vice versa. Embodiments of the charging station have the same advantages as the corresponding charging method.

### A system:

In an aspect, a system comprising a charging station and a device comprising a rechargeable battery is provided. The system comprises a charging station as described above in the detailed description of 'mode(s) for carrying out the invention' and in the claims and a portable device comprising a rechargeable NiMH battery, wherein the charging station and the portable device are adapted to allow recharging of the NiMH battery when the portable device is located in the charging station. In an embodiment, the portable device is a communication device, a camera, an entertainment device, e.g. a listening device or the like. In a particular embodiment, the listening device is a hearing instrument, a headset, an earphone, an ear protection device or a combination thereof.

### A tangible computer-readable medium:

A tangible computer-readable medium storing a computer program comprising program code means for causing a data processing system to perform at least some of the steps of the method described above, in the detailed description of 'mode(s) for carrying out the invention' and in the claims, when said computer program is executed on the data processing system is furthermore provided by the present invention. In addition to being stored on a tangible medium such as diskettes, CD-ROM-, DVD-, or hard disk media, or any other machine readable medium, the computer program can also be transmitted via a transmission medium such as a wired or wireless link or a network, e.g. the Internet, and loaded into a data processing system for being executed at a location different from that of the tangible medium.

### A data processing system:

A data processing system comprising a processor and program code means for causing the processor to perform at least some of the steps of the method described above, in the detailed description of 'mode(s) for carrying out the invention' and in the claims is furthermore provided by the present invention.

Further objects of the invention are achieved by the embodiments defined in the dependent claims and in the detailed description of the invention.

As used herein, the singular forms "a," "an," and "the" are intended to include the plural forms as well (i.e. to have the meaning "at least one"), unless expressly stated otherwise. It will be further understood that the terms "includes," "comprises," "including," and/or "comprising," when used in this specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements maybe present, unless expressly stated otherwise. Furthermore, "connected" or "coupled" as used herein may include wirelessly connected or coupled. As used herein, the term "and/or" includes any and all combinations of one or more of the associated listed items. The steps of any method disclosed herein do not have to be performed in the exact order disclosed, unless expressly stated otherwise.

### BRIEF DESCRIPTION OF DRAWINGS

The invention will be explained more fully below in connection with a preferred embodiment and with reference to the drawings in which:
FIG. 1 shows flow charts of a charging algorithm according to embodiments of the invention, FIG. 1a illustrating a more general embodiment and FIG. 1b a more specialized embodiment,
FIG. 2 shows a typical charge profile for a NiMH battery according to an embodiment of the present invention,
FIG. 3 shows A charging station for a NiMH battery or a device comprising a NiMH battery, and
FIG. 4 shows examples of charging (FIG. 4a) and discharging (FIG. 4b) profiles using a charging algorithm according to the invention compared to a prior art charging algorithm.

The figures are schematic and simplified for clarity, and they just show details which are essential to the understanding of the invention, while other details are left out.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### MODE(S) FOR CARRYING OUT THE INVENTION

### Example:

An objective of the charging procedure is to ensure proper charging of rechargeable relatively small capacity rechargeable NiMH batteries, exemplified by a button cell type P312accu manufactured by Varta (VARTA Microbattery GmbH, Ellwangen, Germany). It is a further objective to ensure that reversed cells and primary cells of the types zinc-air, alkaline and silver oxide are not accidentally charged. The basic technology behind NiMH and related batteries is e.g. discussed in US patent 4,623,597.

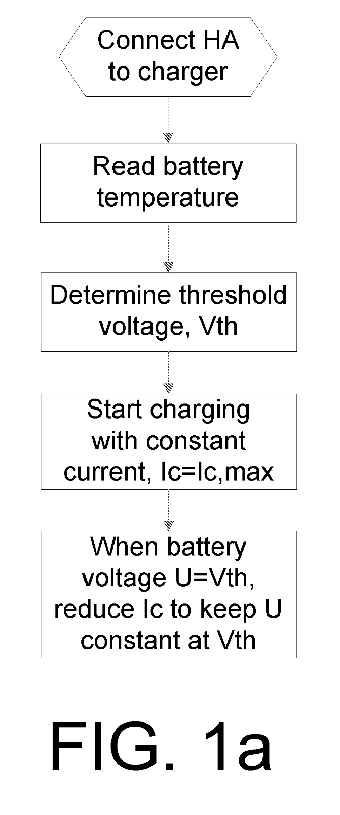

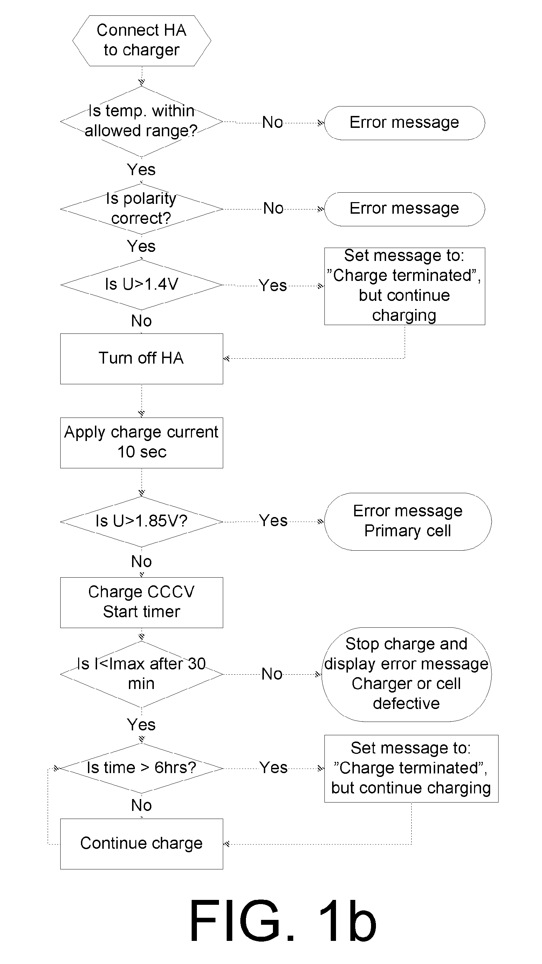

FIG. 1 shows flow charts of a charging algorithm according to embodiments of the invention, FIG. 1a illustrating a more general embodiment and FIG. 1b a more specialized embodiment.
FIG. 1a shows the general steps of a method of charging or recharging a NiMH battery according to an embodiment of the invention. The method comprises the steps of
   - Connecting a battery or portable device (here a hearing aid (HA) is assumed) comprising the battery to the charging station;
   - Reading the temperature T of the battery (or its immediate environment) from a temperature sensor;
   - Determining an appropriate threshold voltage Vₜₕ in accordance with the temperature T;
   - Start charging the battery with a constant current, I_{c}=I_{c,max} and providing a constant charge current until the predefined threshold voltage Vₜₕ is reached;
   - When the battery voltage U=Vₜₕ, reduce I_{c} to keep U constant at Vₜₕ.
This has the advantage of providing an effective charging method. It has the further advantage that the end time of the charging process is of minor importance (because a further charging has limited degrading effect on battery life time), which allows a user to leave the battery or portable device in the charger until he or she needs the item in question.

A more specific algorithm for charging a NiMH battery is illustrated in FIG. 1b and comprises the following steps:

| **S#** | **Method step** | **Comment** |
|---|---|---|
| S1 | Provide that the battery (e.g. located in the device which it energizes) is electrically connected to a charger | |
| S2 | Check that the temperature is within an allowed range Tₘᵢₙ < T < Tₘₐₓ [*if NOT, STOP charging, provide error message "Temperature error", otherwise, CONTINUE*] | e.g. between Tₘᵢₙ = 0 °C and Tₘₐₓ = 40 °C |
| S3 | Check whether the polarity of the battery is OK [*if NOT, STOP charging, provide error message* "*Polarity error", otherwise, CONTINUE*] | |
| S4 | Check that the voltage U of the battery is below the nominal battery voltage V_{N} [*if NOT, provide message "Charge terminated" but continue charging, otherwise, CONTINUE*] | e.g. U < 1.4 V |
| S5 | Provide that the battery or the device, which it energizes, is unloaded | e.g. by setting the device in an off-mode |
| S6 | Apply a charge current I_{c} to the battery for a relatively short time t_{cheek1} | e.g. for t_{check1} = 10 s |
| S7 | Check whether the voltage of the battery is above a predefined value V_{check} [*if YES, STOP charging, provide error message "Primary cell", otherwise, CONTINUE*] | e.g. V_{check} > 1.85 V |
| S8 | Determine a predefined threshold voltage Vₜₕ depending on the temperature T of the battery | e.g. by Vₜₕ(T) = 1.485·V - 0.003·(T [°C] - 25) V |
| S9 | Start charging and monitor time, t | |
| S9.1 | Provide a constant charge current I_{c,max} until the predefined threshold voltage Vₜₕ is reached | e.g.I_{c,max}= 1 C |
| S9.1 | Keep the voltage constant at Vₜₕ by reducing the charge current I_{c} | |
| S10 | After a predefined charging time t_{cheek2}, check whether the charge current I_{c} is smaller than I_{c,max} [*if NOT, STOP charging, provide error message "Charger or cell defective", otherwise, CONTINUE*] | e.g. t_{check2}= 30 min. |
| S11 | After a predefined charging time t_{charge}, provide message "Charge terminated", but continue charging | e.g. t_{charge} = 6 h |

### Fault detection:

Apart from the basic charging algorithm steps (S8, S9, S9.1, S9.2) the method comprises fault detection steps (S3, S7, S10).

Three types of faults are defined.
1. Hearing aid inserted backwards in charger, resulting in reversed polarity in the charger. This is detected by voltage measurement before applying charge current. When voltage is negative, device connectivity to charger is reversed or battery is inserted reversed and the user is notified by an error message (S3).
2. If a primary cell of correct physical size is inserted in the hearing aid, the charger must preferably be capable of detecting this, to abort the charge procedure and to display an error message informing the user. The presence of a primary cell is e.g. detected by detecting an excessive voltage rise during the early stage of charging. If e.g. the battery voltage U(t) > 1.85 V within a short time tₑₕₑₑₖ₁ (e.g. tₑₕₑₑₖ₁ = 10 s) of charge with the maximum charge current I_{c,max} (e.g. I_{c,max} = 1 C) the battery is assumed to be a primary cell; charge is aborted and the user is notified by an error message (S7).
3. Charger or battery is defective and the battery cannot reach constant voltage level Vₜₕ within specified time. To avoid severe overcharge of the battery, the charging is interrupted, if charge current doesn't diminish within a predefined time t_{check2} (e.g. t_{check2} = 30 minutes) and the user is notified by an error message to seek service (S10).

### Interaction with a device comprising a rechargeable battery:

The charger shall preferably force the device comprising the NiMH battery (e.g. a hearing aid) to turn off before the charging is initiated. This can e.g. be implemented by reducing the cell voltage of the device to be charged sufficiently that the device's (e.g. the hearing aid's) battery protection is activated. This can be done by reducing the cell voltage to 0.8 V or less for a predefined short time (e.g. in the range from 1 ms to 10 ms).

The user is notified through messages shown on a display of the charging station about possible faulty states or other service messages, e.g. that the charging process is terminated after 6 hours, even though charging is continued at trickle charge rate assuring that the hearing aid is fully charged even if left in charge for an extended period of time.

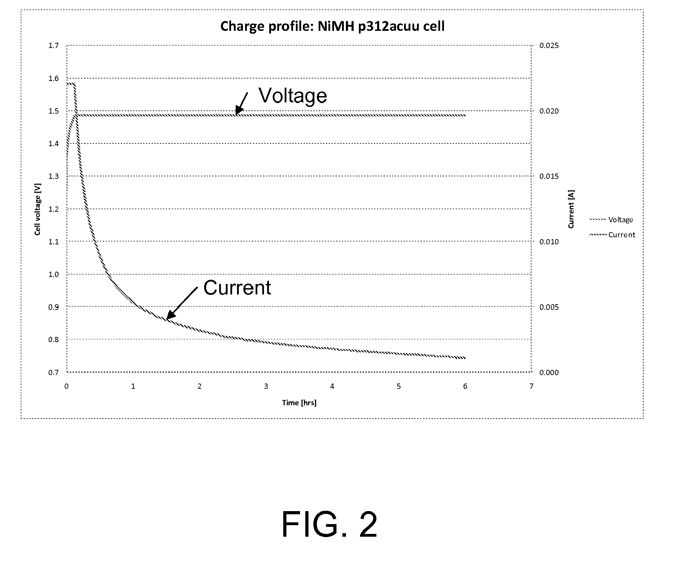

FIG. 2 shows a typical charge profile for a NiMH battery according to an embodiment of the present invention.

The charge algorithm is a constant current charge followed by constant voltage with tapering current. The current during constant current charge is a predefined value in the range from 5 to 50 mA, e.g. 22 mA or 11 mA. When constant voltage Vₜₕ (equal to the nominal cell voltage at the temperature in question) is reached the charger must switch to constant voltage charge mode. In the example of FIG. 2, the constant voltage level Vₜₕ (appr. 1.48 V, left scale) is reached after appr. 10 minutes. Until that time the charging current I_{c} is I_{c,max}, here 22 mA (right scale). After that time the voltage is held constant at Vₜₕ by continuously lowering the charging current I_{c}. The battery is charged for 6 h in the example of FIG. 2. The charge current I_{c} after 6 hours of charging is appr. 1 mA (still decreasing).

The voltage level Vₜₕ for constant voltage must be temperature compensated. The compensation factor for a NiMH battery is -3 mV/°C, while voltage at room temperature (25°C) is 1.485 V.

### A charging station:

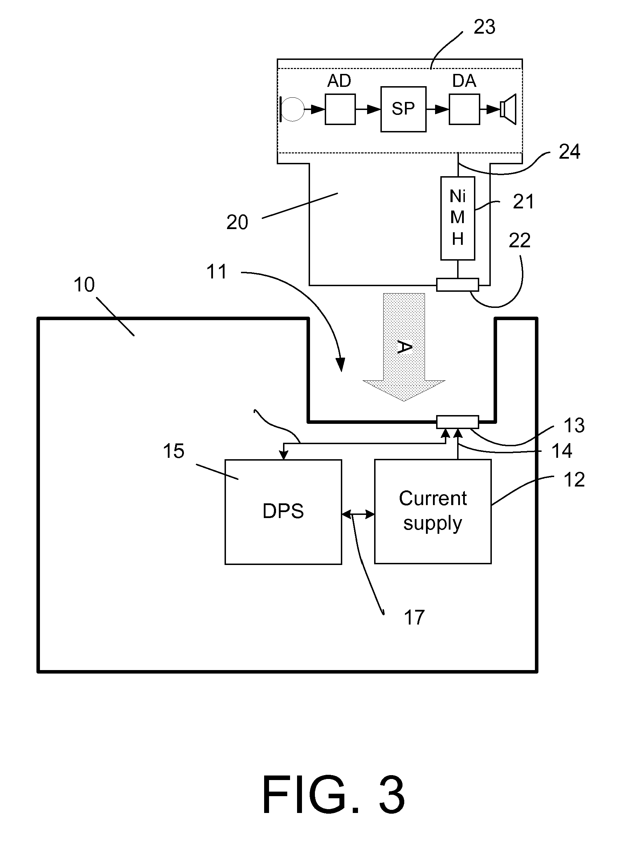

FIG. 3 shows A charging station for a NiMH battery or a device comprising a NiMH battery. The charging station 10 comprises a charging chamber 11 for receiving a rechargeable battery or a device 20 (e.g. a portable listening device) comprising a rechargeable battery 21. The charging station further comprises a variable current source (*Current supply*) 12 for charging the rechargeable battery 21 when located in the charging chamber 11. The charging station and the device comprising a rechargeable battery further comprise corresponding interfaces 13, 22 allowing a transfer of energy from the charging station to the rechargeable battery thereby recharging the battery when the battery/device 20 is mounted in the charging chamber 11 of the charging station 10 (cf. arrow *A* indicating that the interfaces 13, 22 are to be brought in close contact, e.g. electrically connected). The current source 12 is connected to the interface 13 via connection 14. The interface 13, 22 further allows the charging station to receive status information concerning the rechargeable battery, e.g. its current voltage or a temperature of the battery. In an embodiment, the charging station comprises a temperature sensor for measuring the current temperature of the environment, e.g. the battery of the device to be charged, or the casing of the device to be charged or the temperature of the charging station or its charging chamber. Alternatively or additionally, a temperature sensor may be provided in the device 20 comprising the rechargeable battery. The charging station further comprises a data processing system (DPS) 15 comprising a processor and program code means for causing the processor to perform steps of a charging algorithm (e.g. as described above in connection with FIG. 1). The variable current source 12 is controlled by the data processing system according to the charging algorithm via connection 17.

In an embodiment, the charging algorithm is used for a NiMH battery located in a listening device 20, e.g. a hearing instrument and used for energizing the instrument. In the embodiment of FIG. 3, a system comprising a charging station 10 and a portable device 20 comprising a rechargeable battery 21 is illustrated. The device 20 comprises a listening instrument including functional blocks input transducer (microphone) for converting an acoustic input signal to an electrical signal, connected to an analogue to digital converter (AD) connected to a signal processing unit (SP) connected to a digital to analogue converter (*DA*) connected to an output transducer (Receiver) for presenting a processed output signal to a user. The functional blocks enclosed by dotted rectangle 23 form part of a forward path of a listening instrument, e.g. for providing a frequency dependent gain of the input signal to a user, e.g. to compensate for a hearing impairment.

In an embodiment, the charging station and the device comprising the NiMH battery is adapted to wirelessly charge the NiMH battery (in that at least a part of the interface 13, 22, e.g. the energy transfer, is wireless, e.g. inductive, cf. e.g. WO 2006/077192 A1). Alternatively, the charging station and the device comprising the NiMH battery may be adapted to charge the NiMH battery via galvanic electrical connections 13, 22 (e.g. comprising electrical connectors, e.g. of the plug/socket type or otherwise electrically connecting the current source to the rechargeable battery, via corresponding cooperating electrical contact terminals on the charging device 10 and the portable device 20).

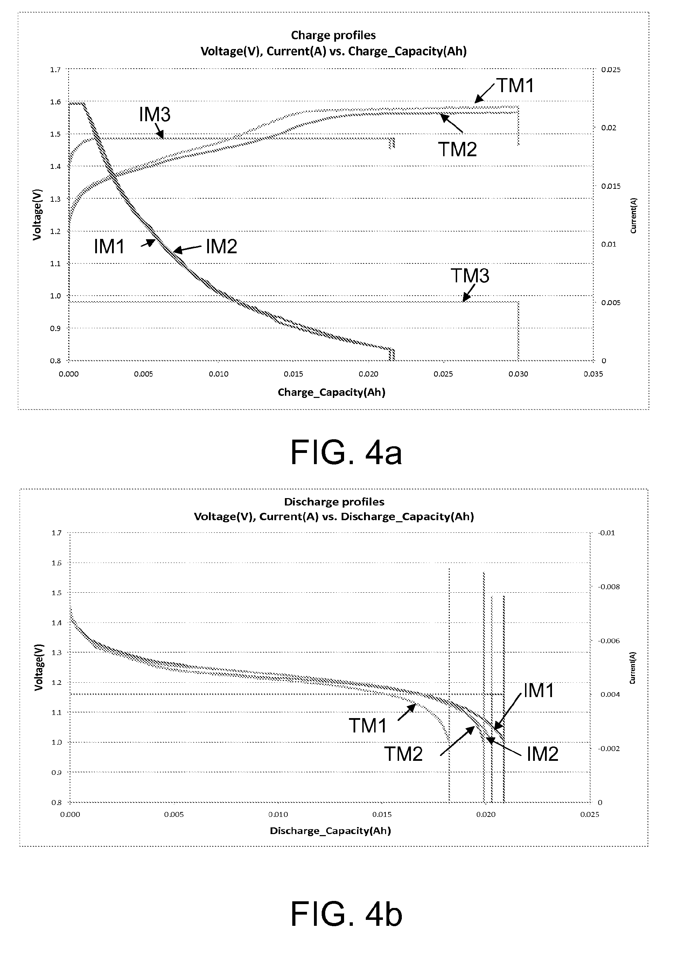

FIG. 4 shows examples of charging (FIG. 4a) and discharging (FIG. 4b) profiles using a charging algorithm according to the invention compared to a prior art charging algorithm. In both graphs, the linear voltage axis extends from 0.8 V to 1.7 V is the left vertical axis and the current axis is the right vertical axis. In FIG. 4a, the linear current axis extends from 0 A to 0.025 A (25 mA), whereas in FIG. 4b, the linear current axis extends from 0 A to 0.01 A (10 mA). The horizontal axes represent charge capacity (FIG. 4a) and discharge capacity (FIG. 4b), respectively. The charge capacity axis (FIG. 4a) extends from 0 Ah to 0.035 Ah (35 mAh) and the discharge capacity axis (FIG. 4b) extends from 0 Ah to 0.025 Ah (25 mAh).

FIG. 4a shows various examples of charging profiles for a NiMH battery. A total of four batteries were charged for 6 hours. Two of the batteries (graphs IM1, IM2) were charged using the method according to the invention and received app. 22 mAh charge, while the two other batteries (graphs TM1, TM2) were charged according to a traditional method received 30 mAh (5 mA in 6 hours, see TM3), in other words an excess or unnecessary overcharge of 36%. The two batteries being charged according to the conventional method reached a higher voltage level (∼1.56-1.58 V) during charge than the two batteries being charged according to the invention (∼1.48 V). The available capacity for discharge was, however, slightly higher for the batteries being charged with a method according to the present invention (see discharge profiles in FIG. 4b).

FIG. 4b shows various examples of discharging profiles for a NiMH battery. The horizontal line is a constant current discharge profile. A total of four batteries have been discharged after being charged with a conventional method (TM1, TM2) and with a method according to the present invention (IM1, IM2), respectively. The two batteries with highest discharged capacity (20.5 mAh and 21 mAh, respectively) were charged with a method according to the invention. The two batteries with lowest capacity (18 mAh and 20 mAh, respectively) were charged according to a conventional constant current charging method (see graph TM3 in FIG. 4a).

In addition to the slightly higher available discharge capacity, the more gentle charging method (including less overcharging) and the possibility of always providing a fully charged battery when a device is needed (by leaving the battery/device in the charger until it is needed), the present charging method has the advantage compared to the traditional method that no timer is needed to stop the charging process.

The invention is defined by the features of the independent claim(s). Preferred embodiments are defined in the dependent claims. Any reference numerals in the claims are intended to be non-limiting for their scope.

Some preferred embodiments have been shown in the foregoing, but it should be stressed that the invention is not limited to these, but may be embodied in other ways within the subject-matter defined in the following claims.

### REFERENCES

US 6,731,096 B1 (MOTOROLA) 04-05-2004
US 4,623,597 (ENERGY CONVERSION DEVICES) 18-11-1986
WO 2006/077192 A1 (OTICON) 27-07-2006

## Claims

1. A method of charging or recharging a NiMH battery,
comprising
a) providing a constant charge current until a predefined threshold voltage is reached;
b) when the predefined threshold voltage is reached, keeping the voltage constant by reducing the charge current;
wherein the predefined threshold voltage is determined depending on the temperature of the battery.

2. A method according to claim 1 wherein the constant charge current is in the range from 0.5·C to 2·C.

3. A method according to claim 1 or 2 wherein the reference voltage V_{N}(T₀) at the reference temperature T₀ is given by 1.480 V < V_{N}(T₀) < 1.500 V.

4. A method according to any one of claims 1-3 wherein the temperature dependence of the nominal reference voltage V_{N} fulfils the relation 0.002 < dV_{N}/dT [V/°C] < 0.004, where T is the temperature of the battery.

5. A method according to any one of claims 1-4 wherein the predefined threshold voltage is determined as Vₜₕ(T) = V(T₀) + (T-T₀)·dV/dT, e.g. as Vₜₕ(T) = 1.485·V - 0.003.(T [°C] - 25) V.

6. A method according to any one of claims 1-5 wherein the NiMH battery has a capacity smaller than or equal to 50 mAh.

7. A method according to any one of claims 1-6 wherein the method comprises checking whether the battery is an appropriate rechargeable battery.

8. A method according to any one of claims 1-7 wherein the method comprises terminating charging, in case the predefined threshold voltage is not reached in a predefined time.

9. A method according to any one of claims 1-8 adapted to provide that the overcharging of the battery during a recharging process is smaller than or equal to 35%, such as smaller than or equal to 25%, such as smaller than or equal to 15%.

10. A method according to any one of claims 1-9 adapted to provide that the temperature increase during charging is limited, e.g. ≤ 5 °C, such as ≤ 3 °C, such as ≤ 1 °C.

11. A charging station for charging or recharging rechargeable batteries comprising
A) a charging chamber for receiving a rechargeable battery or a device comprising a rechargeable battery;
B) a variable current source for charging a rechargeable battery located in the charging chamber;
C) an interface for transferring energy from the charging station to the rechargeable battery and for transferring status information from the rechargeable battery to the charging station;
D) a data processing system comprising a processor and program code means for causing the processor to perform at least some of the steps of the method according to any one of claims 1-8 using said charging chamber, said variable current source and said interface.

12. A system comprising a charging station according to claim 11 and a device comprising a rechargeable NiMH battery, wherein the charging station and the portable device are adapted to allow recharging of the NiMH battery when the portable device is located in the charging station.

13. A system according to claim 12 wherein the portable device is a communication device, a camera, an entertainment device, e.g. a listening device or the like, such as a hearing instrument, a headset, an earphone, an ear protection device or a combination thereof.

14. A tangible computer-readable medium storing a computer program comprising program code means for causing a data processing system to perform at least some of the steps of the method of any one of claims 1-10, when said computer program is executed on the data processing system.

15. A data processing system comprising a processor and program code means for causing the processor to perform at least some of the steps of the method of any one of any one of claims 1-10.
